# DEMANDE DE BREVET EUROPEEN

(11) **EP 1 182 760 A1**
(43) Date de publication de la demande: **27.02.2002**
(21) Numéro de dépôt: 01410090.3
(22) Date de dépôt: 13.07.2001
(51) Int. Cl.: H02G 5/06

(54) **Cloison étanche de compartimentage et installation électrique blindée trphasée à isolation gazeuse pourvue d'une telle cloison**

(30) Priorité: 25.08.2000 FR 0010949
(71) Demandeur: Schneider Electric High Voltage SA, 38050 Grenoble Cédex (FR)
(72) Inventeur: Diaferia, Cataldo, Schneider Electric Ind. SA, 38050 Grenoble cedex 09 (FR)
(74) Mandataire: Broydé, Marc

(57) **Abrégé**

Une installation électrique blindée triphasée à isolation gazeuse comporte un premier tronçon 10 muni d'une enveloppe métallique 16, un deuxième tronçon 12 muni d'une enveloppe métallique 18, et une cloison étanche 14 séparant les deux tronçons. La cloison 14 est constituée d'une paroi métallique 32 pourvue d'une couronne périphérique 38 permettant la fixation aux tronçons 10, 12, et de trois lumières 60 permettant de loger chacune une traversée 70 pour une phase de l'installation. Chaque traversée comporte un corps annulaire isolant 72 entourant une électrode 74 et muni de collerettes 90, 92 faisant saillie en direction axiale de manière à diminuer les contraintes diélectriques. L'encombrement axial des traversées 70 est inférieur ou égal à celui de la couronne 38, de sorte que le montage et le démontage de l'installation sont facilités. Optionnellement, la cloison peut être associée à un support de transformateurs de mesure munis d'enroulements de mesure.

## Description

### DOMAINE TECHNIQUE

L'invention est relative à une installation électrique triphasée blindée pour très haute tension, c'est-à-dire acceptant des tensions maximales atteignant ou dépassant 72.5 kV entre phases, comportant trois conducteurs de phase logés à l'intérieur d'une enveloppe métallique étanche commune contenant un gaz isolant, et formée d'aux moins deux tronçons séparés par une cloison étanche de compartimentage.

### ETAT DE LA TECHNIQUE ANTERIEURE

Les cloisons de compartimentage sont destinées en premier lieu à permettre le montage et/ou le démontage d'un tronçon de l'installation, sans affecter les autres tronçons. Elles doivent donc maintenir l'étanchéité des tronçons de l'installation restant sous pression, lors de l'intervention sur un tronçon adjacent. A titre indicatif, on retiendra que la pression de fonctionnement à considérer peut avoisiner 6 à 8 bars et correspond à une pression d'épreuve de 24 bars. Sachant que les tronçons ont une forme généralement cylindrique avec un diamètre intérieur supérieur à 500 mm, les cloisons doivent donc être en mesure de résister à une poussée importante, de l'ordre de 50 tonnes.

Par ailleurs, les cloisons de compartimentage assurent une fonction de traversée pour les conducteurs de phase entre deux tronçons adjacents. A cet effet, les cloisons de compartimentage comportent des électrodes conductrices destinées à être raccordées aux conducteurs de phase de chaque côté de la cloison. Les cloisons de compartimentage doivent assurer l'isolation électrique entre les électrodes, et avec l'enveloppe qui est généralement mise à la terre. Enfin, notons également que les cloisons de compartimentage peuvent assurer une fonction de support pour les conducteurs de phase, contribuant à leur positionnement correct par rapport aux parois de l'enceinte.

Afin d'assurer correctement l'isolation électrique, une solution consiste à insérer les trois électrodes dans une grande plaque de support discoïdale en matériau isolant, généralement une résine époxy. Une cloison étanche de ce type est décrite dans le document DE2624908. Le pourtour de la plaque de support isolante est reçu dans un anneau métallique d'armature permettant sa fixation sur une bride d'extrémité de l'enveloppe de l'un des tronçons de l'installation. Toutefois, le support isolant est alors de grande taille, et en cas de dépressurisation de l'un des compartiments, il doit supporter seul la pression régnant dans le compartiment adjacent, sans déformation notable. Or la tenue mécanique du support isolant est médiocre. En fait, ce type d'installation n'est acceptable que lorsque la pression du gaz diélectrique à l'intérieur des compartiments est relativement faible, et lorsque le diamètre des enveloppes des tronçons d'installation est peu important, ce qui revient à limiter la tension maximale de l'installation. Par contre, lorsque l'on souhaite augmenter la pression normale de fonctionnement ou le diamètre des enveloppes métalliques, la tenue mécanique devient difficile à maîtriser et la fiabilité de l'installation diminue. De plus, la fabrication d'une telle plaque de grande dimension est onéreuse.

Une solution alternative, illustrée par le document EP 717 484, consiste à disposer une plaque métallique de support, pourvue d'alésages permettant l'insertion de traversées individuelles. Chaque traversée individuelle comporte alors une pièce isolante supportant dans sa partie centrale l'une des électrodes. La plaque métallique renforce mécaniquement la structure de la cloison. Toutefois, la plaque métallique influe sur le champ électrique de manière très différente d'une plaque isolante. Pour éviter un amorçage d'arc entre les électrodes et le support, on cherche alors à allonger la ligne de fuite entre les électrodes et la plaque, ce qui amène à donner une forme tronconique caractéristique aux pièces isolantes supportant les électrodes. De tels isolateurs tronconiques font largement saillie en direction axiale hors du plan médian de la cloison. Ceci augmente considérablement l'encombrement global de la cloison. Pour accéder à la cloison ou la démonter, il devient alors nécessaire de prévoir une possibilité de retrait axial des tronçons adjacents. Par ailleurs, il n'est pas possible d'accoler à la cloison un sous-ensemble de mesure comportant des tores de mesure, du fait de la saillie axiale des isolateurs tronconiques.

### EXPOSE DE L'INVENTION

L'invention vise à remédier aux problèmes identifiés ci-dessus. Elle vise en particulier à permettre la réalisation d'une cloison étanche de compartimentage qui soit à la fois robuste, fiable et peu encombrante, qui permette l'installation ou le retrait de la cloison sans nécessiter de déplacement important des tronçons adjacents, et qui permette également le cas échéant l'interposition d'un sous-ensemble de mesure accolé à la cloison et comportant un ou plusieurs tores de mesure.

Selon un premier aspect de l'invention, ces objectifs sont atteints grâce à une cloison étanche de compartimentage destinée à être disposée entre un premier tronçon et un deuxième tronçon d'une installation électrique blindée de très haute tension à isolation gazeuse, chaque tronçon comportant une enveloppe métallique munie d'une bride de fixation et trois conducteurs de phases disposés à l'intérieur de ladite enveloppe, ladite cloison de compartimentage comportant
- une paroi métallique de support définissant un axe géométrique et comportant
   - une couronne externe présentant :
      - une première surface plane de contact tangente à un premier plan géométrique perpendiculaire audit axe géométrique et destinée à être positionnée au contact de la bride du premier tronçon,
      - une deuxième surface plane de contact tangente à un deuxième plan géométrique perpendiculaire audit axe géométrique et destinée à être positionnée au contact de la bride du deuxième tronçon,
   - trois lumières délimitées chacune par un rebord,
- trois traversées, chaque traversée étant disposée dans l'une desdites lumières, dite lumière correspondante, de manière à obturer ladite lumière correspondante et étant située entre lesdits premier et deuxième plans géométriques, chaque traversée comportant
   - un corps isolant muni d'au moins une collerette ,
   - des moyens de fixation et d'étanchéité interne assurant la fixation et l'étanchéité entre le corps isolant et le rebord de la lumière correspondante, et
   - une électrode métallique solidaire du corps isolant, comportant une première extrémité axiale munie de premiers moyens de raccordement permettant le raccordement électrique de l'électrode à l'un des conducteurs dudit premier tronçon, une deuxième extrémité axiale munie de deuxièmes moyens de raccordement permettant le raccordement électrique de l'électrode à l'un des conducteurs dudit deuxième tronçon, et une partie médiane reliant les deux extrémités axiales , le corps isolant s'interposant entre la partie médiane de l'électrode et le rebord de la lumière correspondante.

La présence de la collerette permet de limiter les risques de claquage d'un arc entre les électrodes et la paroi métallique, sans accroître considérablement la ligne de fuite. Elle permet donc de réduire considérablement les dimensions axiales de la couronne isolante, de sorte que celle-ci prenne une forme quasiment discoïdale, comparé à la forme tronconique saillante de l'état de la technique. Du fait du positionnement des traversées en retrait par rapport aux plans de contact, le risque d'endommager le corps isolant des traversées lors du montage ou du démontage est réduit. Le mouvement axial des tronçons adjacents lors du montage ou du démontage est alors réduit au minimum. En limitant l'encombrement axial des traversées par rapport à celui de la paroi métallique de support, il devient possible de monter, sur un premier tronçon déjà fermé par la cloison, un deuxième tronçon, par un mouvement du deuxième tronçon essentiellement tangentiel au plan moyen de la cloison. Il devient également possible de démonter la cloison presque sans déplacer les enveloppes des tronçons avoisinants. Enfin, il devient possible d'accoler un sous-ensemble de mesure à la cloison, et notamment d'accoler un tore d'un transformateur de mesure.

Selon un mode de réalisation, la collerette fait saillie axialement et est séparée de la paroi métallique par un interstice. L'interstice comporte une première partie s'étendant axialement entre la collerette et le rebord de la lumière, et une deuxième partie s'étendant radialement entre le corps isolant et la paroi métallique, cette deuxième partie ayant un fond où le corps isolant et la paroi métallique sont en contact. La collerette réalise alors de manière simple et compacte une protection efficace d'une zone particulièrement vulnérable d'un point de vue diélectrique, dans laquelle les trois milieux constitués par le support métallique, l'isolant solide des traversées et l'isolant gazeux se rejoignent. Préférentiellement, le corps isolant de chaque traversée est muni d'au moins deux collerettes, une première desdites collerettes étant disposée à proximité du rebord de la lumière correspondante, d'un même côté que la première extrémité axiale de l'électrode de ladite traversée, une deuxième desdites collerettes étant disposée à proximité du rebord de la lumière correspondante, d'un même côté que la deuxième extrémité axiale de l'électrode de ladite traversée.

Selon un autre aspect de l'invention, celle-ci concerne également une installation électrique blindée à isolation gazeuse, comportant
- un premier tronçon comprenant
   - une première enveloppe métallique blindée munie d'une bride de fixation,
   - trois conducteurs de phase disposés à l'intérieur de la première enveloppe métallique,
- un deuxième tronçon comprenant
   - une deuxième enveloppe métallique blindée munie d'une bride de fixation,
   - trois conducteurs de phase disposés à l'intérieur de la deuxième enveloppe métallique,
- une cloison étanche de compartimentage selon la description précédente, dont la première surface de contact est disposée au contact de la bride du premier tronçon, et dont la deuxième surface de contact est disposée au contact de la bride du deuxième tronçon, la première et la deuxième enveloppes métalliques étant situées à l'extérieur d'une portion d'espace délimitée par lesdits deux plans géométriques,
- des premiers moyens de serrage et de fixation de la bride du premier tronçon à la couronne externe de la paroi métallique de la cloison,
- des deuxièmes moyens de serrage et de fixation de la bride du deuxième tronçon à la couronne externe de la paroi métallique de la cloison.

Suivant un mode de réalisation particulièrement avantageux, le deuxième tronçon constitue un sous-ensemble de mesure comportant
- un support métallique comportant
   - une couronne externe constituant ladite enveloppe métallique du deuxième tronçon et ladite bride du deuxième tronçon,
   - trois lumières de logement, chaque lumière de logement étant située dans un prolongement axial d'une des lumières de la paroi métallique de support de la cloison étanche,
- au moins un dispositif de mesure logé dans une desdites lumières.

On obtient ainsi un sous-ensemble de mesure accolé à la cloison.

Selon un mode de réalisation, l'installation comporte en outre :
- un troisième tronçon comprenant
   - une troisième enveloppe métallique blindée munie d'une bride, lesdits deuxièmes moyens de serrage et de fixation coopérant d'une part avec la bride de la troisième enveloppe métallique et d'autre part avec la couronne de la paroi métallique de la cloison étanche, de manière à prendre en sandwich la couronne du support métallique du deuxième tronçon entre la bride du troisième tronçon et la couronne de la paroi métallique de la cloison étanche,
   - trois conducteurs de phase disposés à l'intérieur de la troisième enveloppe métallique.

On réduit ainsi le nombre de pièces, tout en facilitant le montage.

Selon un mode de réalisation, le dispositif de mesure se trouve à l'intérieur d'un espace délimité par deux plans géométriques perpendiculaires à l'axe de la paroi métallique, qui encadrent le support métallique et qui sont tangents au support métallique. Le sous-ensemble de mesure peut alors être inséré radialement par rapport à la cloison. Il n'entrave par l'insertion radiale de l'enveloppe du tronçon adjacent.

Selon un mode de réalisation, le dispositif de mesure comporte au moins un tore de mesure, qui constitue par exemple le secondaire d'un transformateur de courant.

### BREVE DESCRIPTION DES FIGURES

D'autres avantages et caractéristiques ressortiront plus clairement de la description qui va suivre de différents modes de réalisation de l'invention, donnés à titre d'exemples non limitatifs, et représentés aux dessins annexés sur lesquels :
- la figure 1 représente en coupe d'une installation électrique haute tension selon l'invention, pourvue d'une cloison étanche ;
- la figure 2 représente une vue en perspective de la cloison étanche de la figure 1 ;
- la figure 3 représente une vue en coupe d'un détail de la cloison étanche de la figure 1;
- la figure 4 représente une vue en coupe d'une installation haute tension selon un deuxième mode de réalisation de l'invention, comportant une cloison étanche et un support de transformateurs de mesure.

### DESCRIPTION DETAILLEE DE DIFFERENTS MODES DE REALISATION DE L'INVENTION

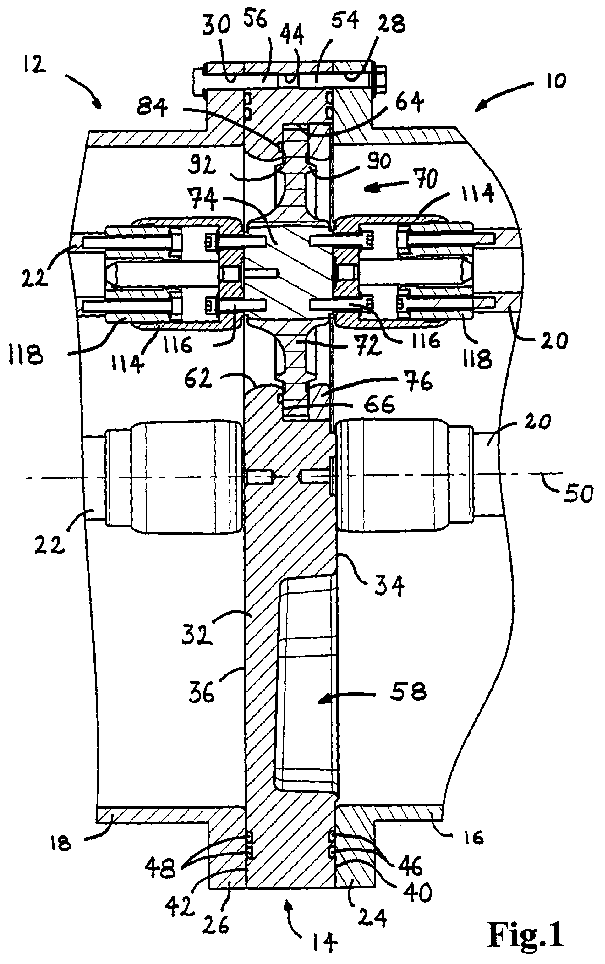

En référence aux figures 1 à 3, une installation électrique triphasée destinée à la transmission d'énergie à très haute tension, c'est-à-dire à des tensions pouvant atteindre ou dépasser 72,5 kV entre deux phases, comporte un tronçon droit 10 et un tronçon gauche 12, séparés par une cloison étanche de compartimentage 14. Chaque tronçon 10 resp. 12 comporte une enveloppe métallique tubulaire rigide 16, resp. 18 reliée électriquement à la terre et renfermant un gaz à rigidité diélectrique élevée, en l'occurrence de l'hexafluorure de soufre, sous une pression élevée, par exemple et à titre purement indicatif 6 bars en condition de fonctionnement et 24 bars en condition d'épreuve. Chaque enveloppe 16, resp. 18 contient trois conducteurs 20, resp. 22, chacun associé à l'une des phases de l'installation. Les conducteurs 20, 22 sont des barres de forme cylindrique, pleines ou tubulaires. Chaque tronçon 10, resp. 12 est muni d'une bride 24, resp. 26 d'extrémité qui forme une portée plane annulaire, pourvue d'alésages 28, resp.30.

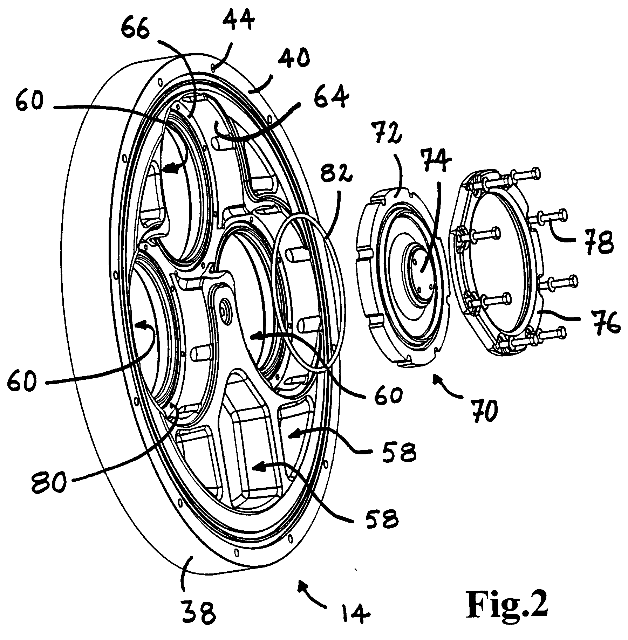

La cloison étanche 14 comporte une paroi métallique de support et d'obturation 32 de forme générale discoïdale, visible en détail sur la figure 2 et définissant deux grandes faces axiales opposées 34, 36. Le pourtour de cette paroi 32 forme une couronne externe 38 avec deux faces planes parallèles et opposées 40, 42, aux dimensions des brides 24, 26 des enveloppes adjacentes 16, 18. Chaque face 40, resp. 42 vient au contact de la bride 24, resp. 26 du tronçon qui lui est adjacent, et est pourvue de trous taraudés 44 correspondant aux alésages 28, 30 des brides. Les deux faces 40, 42 sont usinées de manière à garantir une bonne qualité de contact avec les brides 24, 26 et à contribuer à l'étanchéité de la cloison. Sur chacune des faces 40, 42, deux gorges circulaires permettent d'insérer deux joints d'étanchéité annulaires 46, 48. Les deux faces 40, 42 sont perpendiculaires à un même axe géométrique 50 de la paroi. Des vis de fixations 54, 56 sont insérées dans chaque alésage 28, 30 et vissées dans les trous taraudés 44 de la couronne 38. La paroi métallique 32 se trouve ainsi au potentiel électrique des enveloppes métalliques 16, 18 des deux tronçons 10, 12.

La paroi 32, représentée de façon plus détaillée sur la figure 2, est pourvue de cavités 58 destinées à son allègement. Elle comporte en outre trois lumières 60 de pourtour général cylindrique, situées aux sommets d'un triangle isocèle, dans le prolongement des conducteurs de phase 20, 22. Chaque lumière 60 a un rebord 62, qui forme un chambrage 64 et un épaulement 66. Dans chaque lumière 60 est insérée une traversée 70 comportant un corps annulaire isolant 72 en résine synthétique, à savoir une résine époxy dans l'exemple de réalisation, formant une couronne dans laquelle est disposé un insert 74 constituant une électrode de phase. Le corps isolant 72 de la traversée 70 est positionné en contact avec l'épaulement 66, et pris en sandwich entre l'épaulement 66 et une rondelle métallique 76, le serrage étant assuré par des vis 78, reliant la rondelle 76 à des trous taraudés borgnes 80 pratiqués dans l'épaulement 66. Un joint d'étanchéité 82 est inséré dans une gorge 84 du corps isolant 72 et serré contre l'épaulement 66.

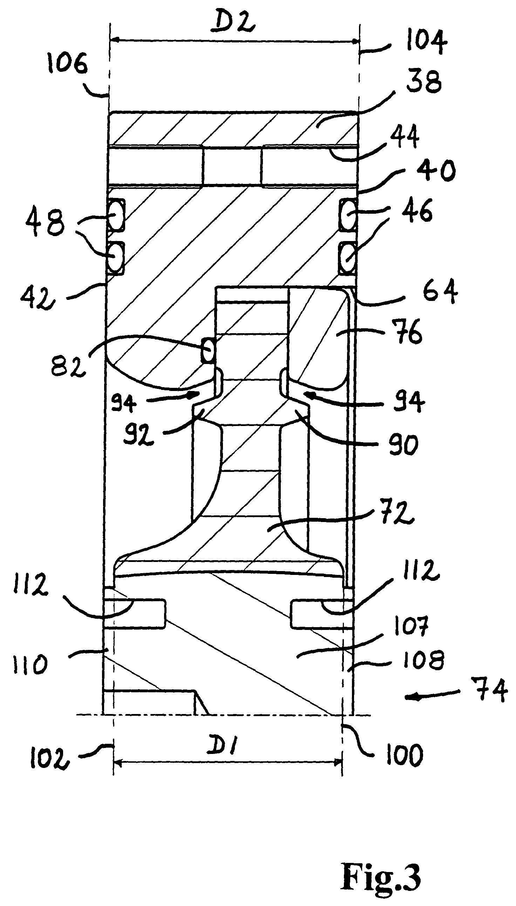

Chaque couronne isolante 72 assure l'isolation électrique entre l'électrode 74 disposée en son centre et la paroi métallique 32. Une zone particulièrement vulnérable du point de vue diélectrique est constituée par l'encastrement de la couronne isolante 72 dans la paroi 32. En effet, les équipotentielles du champ électrique au voisinage de la plaque 32 et de la rondelle 76 sont des surfaces de révolutions qui tendent à suivre la forme générale des parties métalliques. Or si l'on ne regarde que les parties métalliques 32, 76, l'encastrement de la traversée 70, avec l'épaulement 66 d'un côté et la rondelle 76 de l'autre, constitue une zone de relief accidenté, avec deux surfaces à forte courbure en saillie vers les conducteurs de phase 20, 22. Cette disposition est nécessaire pour constituer la fixation en sandwich de la traversée 70. Au niveau de ces parties en saillie, les lignes de champ se concentrent par effet de pointe, les zones les plus vulnérables étant les zones à forte courbure au voisinage immédiat de la couronne 72. Afin de protéger ces zones, le corps isolant 72 de la traversée est pourvu de deux collerettes 90, 92 visibles en détails sur la figure 3, qui font saillie en direction axiale, l'une (92) vers le rebord de l'épaulement, l'autre (90) vers celui de la rondelle, de manière à recouvrir partiellement les parties métalliques en saillie, tout en ménageant, entre la partie métallique et l'isolant, un interstice 94 d'épaisseur et de profondeur adéquates. La modification de la constante diélectrique, à l'interface entre le milieu gazeux et le milieu solide isolant de la traversée, impose des ruptures de pente aux équipotentielles du champ électrique, qui atténuent globalement l'effet de pointe dans la zone vulnérable.

Une telle disposition permet également de protéger la zone où se rencontrent les trois milieux constitués par le corps isolant, la paroi métallique et le gaz, puisque cette zone se situe au fond de l'interstice 94 ménagé entre les parties métalliques au potentiel de l'enveloppe et le corps isolant 72 de la traversée. Afin de mieux encore protéger cette zone de points triples, l'interstice 94 forme un coude et comporte une partie radiale relativement profonde.

Le corps isolant 72 est situé légèrement en retrait par rapport aux rebords extérieurs de la lumière. On a tracé, sur la figure 3, deux plans géométriques 100, 102 perpendiculaires à l'axe 50 et tangents au corps isolant, tels que le corps isolant se trouve entièrement entre les deux plans 100, 102. De même, on a tracé deux plans géométriques 104, 106 perpendiculaires à l'axe 50 et tangents respectivement aux faces planes annulaires 40 et 42 qui assurent le contact et le positionnement de la cloison par rapport aux brides 24, 26. La paroi métallique se trouve entièrement entre ces deux plans 104, 106. On constate que la distance D1 séparant les deux plans 100, 102 est plus faible que la distance D2 séparant les deux plans 104, 106. En fait, les deux plans 104, 106 encadrent les deux plans 100, 102. Les brides 24, 26 se trouvent entièrement à l'extérieur et de part et d'autre de l'espace délimité par les plans de contact 104, 106.

L'électrode 74 comporte une partie médiane cylindrique 107 noyée dans la couronne isolante 72 et deux portions d'extrémités axiales 108, 110 de part et d'autre de cette partie médiane. Les deux plans géométriques 104, 106 sont tangents aux portions d'extrémités 108, 110.

L'électrode 74 est percée de quatre trous taraudés borgnes 112 visibles sur la figure 3. Des manchons 114 constituant des prises d'embrochage sont raccordés aux extrémités axiales de chaque électrode, par l'intermédiaire de vis 116 vissées dans les trous 112. Les barres conductrices 20, 22 sont pourvues d'embout 118 embrochés dans les manchons 114.

Lors du montage de l'installation, en supposant que le tronçon droit 10 et la cloison de compartimentage 14 soient déjà assemblés l'un à l'autre, et sous pression, il est possible d'amener l'enveloppe 18 du tronçon gauche 12 par un mouvement essentiellement radial, c'est-à-dire perpendiculaire au plan des faces de contact 40, 42 de la cloison 14. Une fois positionnée, l'enveloppe 18 est vissée à la cloison 14, puis les connexions intérieures sont effectuées. On évite ainsi lors du montage un déplacement axial de l'enveloppe 18 du deuxième compartiment, ce qui est très avantageux dans un environnement confiné ou en présence d'autres parties de l'installation empêchant tout déport dans la direction axiale.

Par ailleurs, il est possible de démonter la cloison 14 sans avoir à déplacer les enveloppes 16 et 18. Il suffit pour cela de débrocher les conducteurs 20, 22, de dévisser les vis 116 par l'intérieur des enceintes 16, 18, puis de dévisser les vis 54, 56 et d'extraire la cloison 14 radialement de l'espace séparant les brides 24 et 26. Le remontage s'effectue le cas échéant de la même manière.

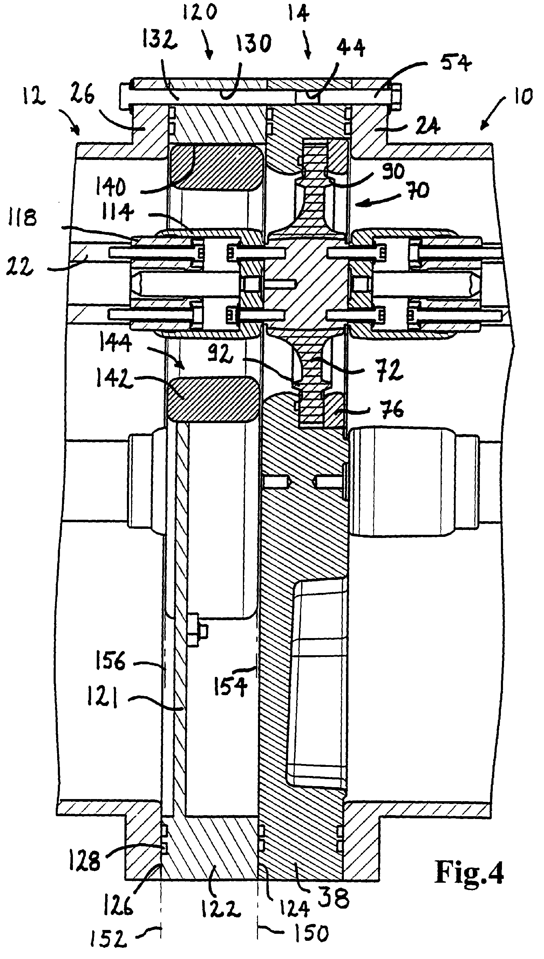

En référence à la figure 4, un deuxième mode de réalisation de l'invention reprend pour l'essentiel les dispositions du premier mode de réalisation, de sorte que les signes de référence identiques ont été utilisés pour désigner les parties identiques ou similaires. En fait, ce mode de réalisation diffère du premier par l'insertion d'un tronçon intermédiaire 120 constituant un sous-ensemble de mesure, entre l'enveloppe 18 du tronçon gauche 12 et la cloison 14.

Le sous-ensemble de mesure 120 comporte une plaque métallique de support 121 pourvue d'une couronne de fixation 122. La couronne 122 comporte deux faces axiales de contact 124, 126 opposées, dont l'une (126), du côté du tronçon gauche 12, est munie de gorges pour le logement de joints d'étanchéité 128. La couronne 122 est également percée d'alésages 130, qui permettent l'introduction de vis de fixation 132 qui traversent les alésages 30 et 130 et viennent se visser dans les trous taraudés 44 de la cloison 14. Le support 121 se trouve ainsi pris en sandwich entre la bride 26 et la cloison 14.

Le support 121 est ajouré et pourvu de trois lumières 140 qui sont chacune dans le prolongement axial d'une des lumières 60 de la cloison 14. Il est ainsi possible d'aligner pour chaque phase le conducteur 22, le manchon 114 et l'électrode 74. Chaque lumière 140 permet de loger un tore 142 comportant un ou plusieurs bobinages et constituant le secondaire d'un transformateur de courant 144 pour la phase correspondante, le primaire étant constitué par le manchon conducteur 114.

Sur la figure 4, on a représenté deux plans géométriques 150, 152 qui sont tangents aux faces de contact axiales opposées 124, 126 de la couronne 122. De même, on a représenté deux plans géométriques 154, 156 qui définissent l'encombrement axial des bobinages 142. Les deux plans 154, 156 sont encadrés par les deux plans 150, 152.

Lors du montage de l'installation, en supposant que le tronçon droit 10 et la cloison de compartimentage 14 soient déjà assemblés l'un à l'autre, et sous pression, il est possible d'amener le support 121 par un mouvement essentiellement radial, c'est-à-dire parallèle aux plans 150, 152, sans risque d'endommager les bobinages 142. Une fois le support positionné, l'enveloppe 18 est vissée puis les connexions intérieures sont effectuées. De même, il est possible de démonter le support 121 sans déplacer ni l'enveloppe 16 du tronçon droit, ni la cloison 14, ni l'enveloppe 18 du tronçon gauche.

Naturellement diverses variations sont possibles.

Dans les exemples de réalisation, l'électrode 74 est un insert sur lequel est moulé le corps isolant 72, assurant ainsi une parfaite étanchéité entre les deux éléments de la traversée. Toutefois, il est possible de prévoir des formes alternatives de fixation de l'électrode par rapport au corps isolant, pour autant qu'elles assurent également l'étanchéité recherchée.

L'étanchéité entre les brides 24, 26 et la couronne 38 est assurée grâce aux surfaces de contact 40, 42 et au joints d'étanchéité 46, 48 logés dans les gorges annulaires de la couronne 38. Alternativement, les joints d'étanchéité peuvent être logés dans des gorges pratiquées dans les brides 24, 26.

Selon une variante non représentée, on peut également prévoir que les extrémités 108, 110 seront en retrait par rapport aux plans 104, 106.

Le sous-ensemble de mesure peut n'être équipé d'un tore de mesure que pour l'une des phases. Plusieurs tores de mesures peuvent être utilisés pour une phase donnée.

Il est possible de monter le tronçon intermédiaire 120 entre le tronçon droit 10 et la cloison de compartimentage 14.

Dans l'exemple de réalisation, les enceintes, les brides et la cloisons sont de forme générale cylindrique. Toutefois, on peut envisager d'autres forme d'enceinte, par exemple à section droite rectangulaire.

## Revendications

1. Cloison étanche de compartimentage (14) destinée à être disposée entre un premier tronçon (10) et un deuxième tronçon (12 ; 120) d'une installation électrique blindée de très haute tension à isolation gazeuse, chaque tronçon comportant une enveloppe métallique (16, 18, 122) munie d'une bride de fixation (24, 26, 122) et trois conducteurs de phases (20, 22, 114) disposés à l'intérieur de ladite enveloppe, ladite cloison de compartimentage (14) comportant
• une paroi métallique de support (32) définissant un axe géométrique (50) et comportant
• une couronne externe (38) présentant :
• une première surface plane de contact (40) tangente à un premier plan géométrique (104) perpendiculaire audit axe géométrique (50) et destinée à être positionnée au contact de la bride (24) du premier tronçon,
• une deuxième surface plane de contact (42) tangente à un deuxième plan géométrique (106) perpendiculaire audit axe géométrique (50) et destinée à être positionnée au contact de la bride (26) du deuxième tronçon,
• trois lumières (60) délimitées chacune par un rebord (62),
• trois traversées (70), chaque traversée (70) étant disposée dans l'une desdites lumières (60), dite lumière correspondante, de manière à obturer ladite lumière correspondante et étant située entre lesdits premier et deuxième plans géométriques, chaque traversée comportant
• un corps isolant (72) muni d'au moins une collerette (90, 92),
• des moyens de fixation et d'étanchéité interne (76, 78, 80, 82) assurant la fixation et l'étanchéité entre le corps isolant et le rebord de la lumière correspondante, et
• une électrode métallique (74) solidaire du corps isolant (72), comportant une première extrémité axiale (108) munie de premiers moyens de raccordement (112) permettant le raccordement électrique de l'électrode (74) à l'un des conducteurs (20, 114) dudit premier tronçon (10), une deuxième extrémité axiale (110) munie de deuxièmes moyens de raccordement (112) permettant le raccordement électrique de l'électrode (74) à l'un des conducteurs (114, 22) dudit deuxième tronçon (12), et une partie médiane (107) reliant les deux extrémités axiales (108, 110), le corps isolant (72) s'interposant entre la partie médiane (107) de l'électrode et le rebord (62) de la lumière correspondante.

2. Cloison selon la revendication 1, dans laquelle la collerette (90, 92) fait saillie axialement et est séparée de la paroi métallique (32) par un interstice (94).

3. Cloison selon la revendication 2, dans laquelle l'interstice (94) comporte une première partie s'étendant axialement entre la collerette (90, 92) et le rebord (62) de la lumière, et une deuxième partie s'étendant radialement entre le corps isolant (72) et la paroi métallique (32), cette deuxième partie ayant un fond où le corps isolant (72) et la paroi métallique (32) sont en contact.

4. Cloison selon l'une quelconque des revendications précédentes, dans laquelle le corps isolant (72) de chaque traversée est muni d'au moins deux collerettes (90, 92), une première (90) desdites collerettes étant disposée à proximité du rebord de la lumière correspondante, d'un même côté que la première extrémité axiale (108) de l'électrode de ladite traversée, une deuxième (92) desdites collerettes étant disposée à proximité du rebord de la lumière correspondante, d'un même côté que la deuxième extrémité axiale (110) de l'électrode de ladite traversée.

5. Installation électrique blindée à isolation gazeuse, comportant
• un premier tronçon (10) comprenant
• une première enveloppe métallique blindée (16) munie d'une bride de fixation (24),
• trois conducteurs de phase (20, 114) disposés à l'intérieur de la première enveloppe métallique (16),
• un deuxième tronçon (12, 120) comprenant
• une deuxième enveloppe métallique blindée (18, 122) munie d'une bride de fixation (26, 122),
• trois conducteurs de phase (22, 114) disposés à l'intérieur de la deuxième enveloppe métallique (18, 122),
• une cloison étanche (14) de compartimentage selon l'une quelconque des revendications précédentes, dont la première surface de contact est disposée au contact de la bride (24) du premier tronçon, et dont la deuxième surface de contact est disposée au contact de la bride (26) du deuxième tronçon, la première (16) et la deuxième (18, 122) enveloppes métalliques étant situées à l'extérieur d'une portion d'espace délimitée par lesdits deux plans géométriques (104, 106),
• des premiers moyens de serrage et de fixation (54) de la bride (24) du premier tronçon à la couronne externe (38) de la paroi métallique de la cloison,
• des deuxièmes moyens de serrage et de fixation (56, 132) de la bride (26, 122) du deuxième tronçon à la couronne externe (38) de la paroi métallique de la cloison.

6. Installation électrique blindée à isolation gazeuse selon la revendication 5, dans laquelle le deuxième tronçon (120) constitue un sous-ensemble de mesure comportant
• un support métallique (121) comportant
• une couronne externe (122) constituant ladite enveloppe métallique du deuxième tronçon et ladite bride du deuxième tronçon,
• trois lumières de logement (140), chaque lumière de logement étant située dans un prolongement axial d'une des lumières (60) de la paroi métallique de support de la cloison étanche,
• au moins un dispositif de mesure (144) logé dans une desdites lumières.

7. Installation électrique blindée à isolation gazeuse selon la revendication 6, comportant en outre :
• un troisième tronçon (12) comprenant
• une troisième enveloppe métallique blindée (18) munie d'une bride (26), lesdits deuxièmes moyens de serrage et de fixation (132) coopérant d'une part avec la bride (26) de la troisième enveloppe métallique et d'autre part avec la couronne (38) de la paroi métallique de la cloison étanche, de manière à prendre en sandwich la couronne (122) du support métallique du deuxième tronçon entre la bride (26) du troisième tronçon et la couronne (38) de la paroi métallique de la cloison étanche,
• trois conducteurs de phase (22) disposés à l'intérieur de la troisième enveloppe métallique.

8. Installation électrique blindée à isolation gazeuse selon la revendication 6 ou la revendication 7, dans laquelle le dispositif de mesure (144) se trouve à l'intérieur d'un espace délimité par deux plans géométriques (124, 126) perpendiculaires à l'axe (50) de la paroi métallique, qui encadrent le support métallique (121) et qui sont tangents au support métallique (121).

9. Installation électrique blindée à isolation gazeuse selon l'une quelconque des revendications 6 à 8, dans laquelle le dispositif de mesure comporte au moins un tore (142) d'un transformateur de mesure (144).
